# FASCICULE DE BREVET EUROPEEN

(11) **EP 1 081 029 B1**
(45) Date de publication et mention de la délivrance du brevet: **21.05.2003**
(21) Numéro de dépôt: 00402356.0
(22) Date de dépôt: 24.08.2000
(51) Int. Cl.: B62D 65/00

(54) **Procédé de montage en aveugle d'au moins un composant et dispositif de mise en oeuvre de ce procédé**
Verfahren zur Blindbefestigung von zumindest einem Element und Vorrichtung zur Durchführung des Verfahren
Procedure for blind-assembly of at least one component and device foor carrying out the procedure

(30) Priorité: 06.09.1999 FR 9911121
(43) Date de publication de la demande: 07.03.2001
(73) Titulaire: MECAPLAST SAM, MC-98000 Monaco (MC)
(72) Inventeur: Morando, Patrick, 06000 Nice (FR)
(74) Mandataire: Debay, Yves

(56) Documents cités:
- EP-A- 0 903 286
- US-A- 2 935 314

## Description

La présente invention concerne un procédé de montage en aveugle d'au moins un composant et un dispositif de mise en oeuvre de ce procédé. Le montage en aveugle de composants est un problème qui se pose aux constructeurs en particulier automobiles. Ce procédé et ce dispositif sont notamment utilisés lors de l'assemblage d'une platine multifonction dans un élément ouvrant pour véhicule. L'élément ouvrant peut-être une porte ou un hayon de véhicule. US 2 935 314 décrit un outil pour positionner une pièce de fixation pour tôle ondulé sur la face inférieure qui est difficilement accessible.

Il est connu dans l'art antérieur que le montage des composants disposés, par exemple, dans l'espace intérieur d'une portière est problématique. En effet, l'espace disponible pour manoeuvrer les composants ainsi que les outils pour assurer leur ajustage est réduit. De plus, certains de ces composants, comme par exemple, la commande d'ouverture extérieure, sont positionnés avec une visibilité quasiment nulle. Ainsi, les opérations de montage de ces composants sont longues et fastidieuses. Les risques d'erreurs de montage sont importants.

Par ailleurs, la tendance des constructeurs à regrouper plusieurs fonctions qui doivent être installées dans le véhicule sur des platines multifonctions réduit encore les possibilités d'accès pour les monteurs.

La présente invention a donc pour premier objet de pallier les inconvénients de l'art antérieur en proposant un procédé permettant le positionnement et le montage en aveugle de composants.

Ce but est atteint par le fait que le procédé de montage en aveugle d'au moins un composant destiné à être mis en place dans un logement difficilement accessible comprend :
- une étape de liaison tridimensionnelle du composant par un lien avec une platine multifonction;
- une étape de formation de moyens de positionnement de la platine multifonctionnelle dans une première paroi pourvue d'au moins un trou permettant le passage du lien et du composant, le dit lien positionnant dans l'espace le composant pour qu'après positionnement de la platine, le composant soit en place dans le logement;
- une étape de fixation de composants supplémentaires sur le composant.

Selon une autre particularité, le logement est solidaire d'une seconde paroi.

Selon une autre particularité, la seconde paroi forme avec la première un volume.

Selon une autre particularité, les composants complémentaires sont un composant d'habillage et un composant de manoeuvre.

Selon une autre particularité, le volume est un ouvrant de véhicule.

Selon une autre particularité, la liaison tridimensionnelle est rigide en X et Z et rigidifiable en Y par une clé.

Selon une autre particularité, la platine multifonctionnelle est une cassette de porte de véhicule.

Selon une autre caractéristique, le procédé de montage en aveugle d'un composant dans un volume constituant un élément ouvrant, formé d'une première paroi extérieure et d'une deuxième paroi intérieure est caractérisé en ce qu'il comprend :
- une étape de rigidification d'un composant sur une cassette multifonction
- une étape de fixation de la cassette dans un logement prévu sur la deuxième paroi et de positionnement d'un composant sur la face interne de la paroi extérieure de l'élément ouvrant
- une étape de suppression de la rigidification
- une étape de montage des composants extérieurs de manoeuvre et d'habillage.

Selon une autre particularité, un élément ouvrant est une portière ou un hayon, l'étape de suppression de la rigidification libère l'espace entre les deux parois formant un puits pour un élément mobile tel qu'une vitre, un des composants destiné à être monté est la partie technique d'une commande extérieure d'ouverture.

Selon une autre particularité, le procédé comprend une étape de montage d'une partie extérieure de la commande d'ouverture de la porte comprenant un organe de manoeuvre et/ou un habillage à l'extérieur de la portière, le montage étant réalisé par fixation sur la commande d'ouverture extérieure pour enserrer la paroi entre la partie extérieure et la partie technique de la commande extérieure d'ouverture.

Selon une autre particularité, un moyen de liaison amovible comprend un barreau comportant des moyens permettant son verrouillage d'une part sur la seconde paroi, et d'autre part sur un des composants destiné à être monté à l'intérieur du volume, ces moyens de verrouillage étant déverrouillables une fois le composant mis en place et fixé dans le volume afin de libérer l'espace entre les deux parois du volume.

Selon une autre particularité, l'étape de montage et de solidarisation de l'ensemble formé par la cassette et de tous les éléments intérieurs à l'intérieur d'une portière de véhicule consiste, d'une part à solidariser chaque élément aux parois de la portière, et d'autre part à solidariser, lorsque cela est nécessaire, au moins un mécanisme de chaque élément à un mécanisme de la cassette.

Un deuxième but de l'invention a pour objet de proposer un dispositif permettant la mise en oeuvre du procédé selon l'invention.

Ce deuxième but est atteint par le fait que le dispositif de montage d'au moins un composant à l'intérieur d'un élément ouvrant de véhicule comprend des moyens de liaison amovible du ou des composants à une cassette destinée à être montée sur l'élément ouvrant, les moyens de liaison amovible étant conformés pour assurer le blocage en rotation et en translation par rapport à la cassette du ou des composants à monter à l'intérieur de l'élément ouvrant.

Selon une autre particularité, un moyen de liaison amovible comprend un barreau comportant des moyens permettant son verrouillage d'une part sur la cassette et d'autre part sur un des composants, ces moyens de verrouillage étant déverrouillables une fois tous les composants mis en place dans la portière afin de libérer le puits de circulation de la vitre.

Selon une autre particularité, un moyen de liaison escamotable comprend un manchon taraudé assurant, par des moyens de solidarisation, la liaison entre la cassette et un composant intérieur, le taraudage du manchon étant destiné à collaborer avec une vis de fixation à une paroi de la portière d'un des éléments intérieurs, l'escamotage du manchon étant obtenu par vissage de la vis de fixation lors de la solidarisation de l'élément intérieur sur la portière.

Selon une autre particularité, les composants intérieurs de portière comprennent, d'une part la partie technique d'une commande extérieure d'ouverture destinée à être solidarisée à la surface intérieure de la tôle formant la paroi extérieure de la portière, par l'intermédiaire d'une partie extérieure, positionnée sur un embouti de la surface extérieure de la tôle et des moyens de fixation assurant la liaison mécanique entre la partie extérieure et la partie technique de la commande extérieure d'ouverture, et/ou d'autre part le mécanisme de serrure de la portière.

Selon une autre particularité, la partie extérieure est constituée d'un habillage et d'un organe de préhension.

Selon une autre particularité, la paroi extérieure de la portière comprend un renfoncement ou une découpe de centrage de la partie extérieure, cette dernière comportant des puits de centrage qui pénètrent dans des broches de la partie technique de la commande d'ouverture extérieure, les puits recevant une vis de liaison de la partie extérieure avec la partie technique de la commande extérieure d'ouverture.

D'autres particularités et avantages de la présente invention apparaîtront plus clairement à la lecture de la description ci-après faite en référence aux dessins annexés dans lesquels :
- la figure 1 représente un schéma simplifié du dispositif permettant la mise en oeuvre du procédé.
- la figure 2 représente un schéma du dispositif permettant la mise en oeuvre du procédé selon l'invention,
- la figure 3 représente une vue en coupe transversale d'une première variante de réalisation du dispositif selon l'invention,
- la figure 4 représente un exemple de réalisation d'un moyen de liaison amovible,
- les figures 5A à 5C représentent les différentes étapes de mise en place et d'enlèvement de l'exemple de réalisation du moyen de liaison amovible de la figure 4,
- les figures 6A à 6C représentent les différentes étapes de mise en place et d'escamotage d'une première variante de réalisation d'un moyen de liaison escamotable,
- les figures 7A à 7C représentent les différentes étapes de mise en place et d'escamotage d'une deuxième variante de réalisation d'un moyen de liaison escamotable,
- les figures 8A et 8B représentent une première, respectivement une deuxième variante, de réalisation d'un boîtier extérieur d'une commande d'ouverture de porte.
- la figure 9 représente une vue en perspective d'une utilisation du procédé défini par rapport à la figure 1.

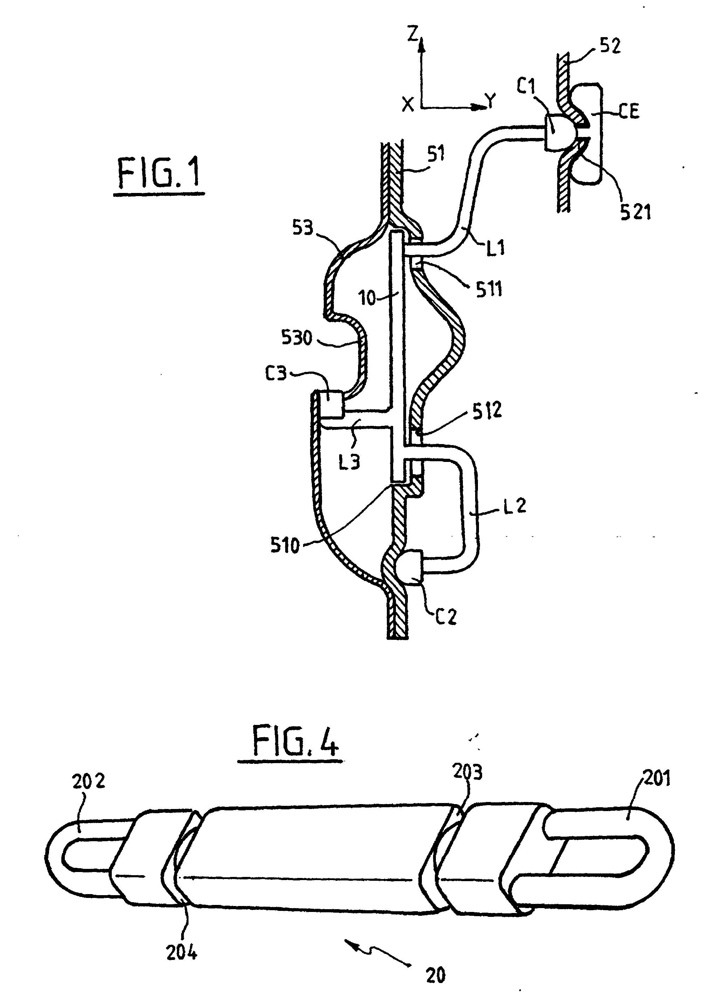

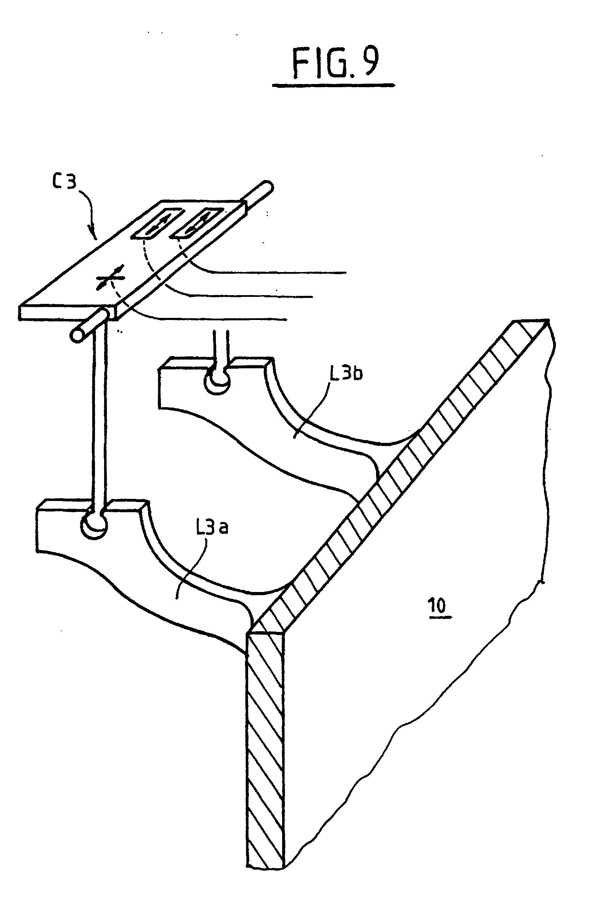

La figure 1 représente un schéma simplifié du principe de l'invention qui consiste à former sur une platine multifonction (10) des liens L1, L2, L3 rigides permettant de positionner dans l'espace chacun des composants C1, C2, C3 qui doivent être montés en aveugle dans des logements prévus pour C1 dans une deuxième paroi (52), pour C2 dans la même paroi (51) et pour C3 dans une troisième paroi (53). La platine multifonction vient se positionner dans un logement ou un renfoncement (510) permettant son positionnement sur la paroi (51). Cette paroi (51) est également pourvue d'orifices (511 et 512) de tailles suffisantes pour permettre le passage du composant et du lien positionnant dans l'espace ce composant. Lorsque la platine est mise en place dans son logement (510), chacun des composants C1, C2, C3 est positionné en vis-à-vis de son logement respectif. Le procédé consiste ensuite à rendre le composant solidaire d'une partie extérieure qui viendra prendre en sandwich la paroi (52) entre C1 et cette partie extérieure. Le lecteur doit bien réaliser que chacun des liens permet un positionnement tridimensionnel du composant C1, c'est à dire que le lien L1 permet à la fois un déplacement en Z et en Y par rapport au point d'attache sur la platine (10) mais également un déplacement en X, c'est à dire perpendiculaire au plan formé par la feuille pour positionner, par exemple, le composant C1 à une certaine distance au-dessus de la feuille. Il peut en être de même pour les liens L2 et L3. Une application du procédé concerne les ouvrants d'un véhicule, à savoir les portières, les hayons ou les capots moteurs. Ainsi dans une portière, la paroi (52) et la paroi externe de la portière, la paroi (53) constitue l'habillage intérieur de la portière. Le composant C3 peut être, comme représenté figure 9, un clavier d'interrupteurs commandant les vitres électriques placées sur la partie plane d'un accoudoir formé dans un renfoncement (530). Le composant C1 peut être la commande extérieure d'ouverture de portières permettant d'actionner la serrure du véhicule.

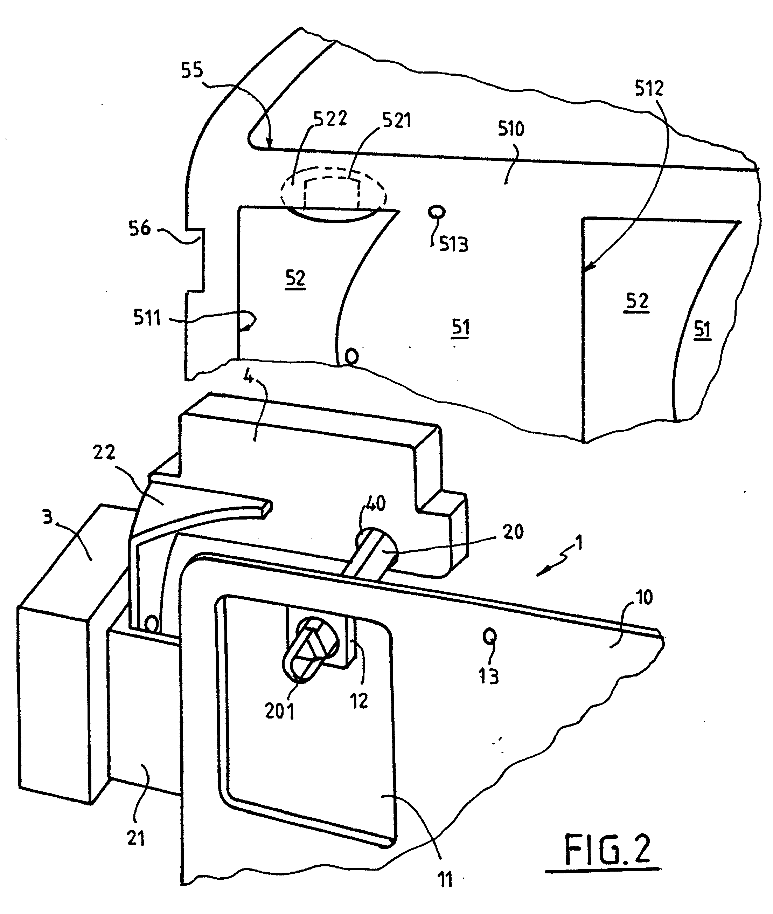

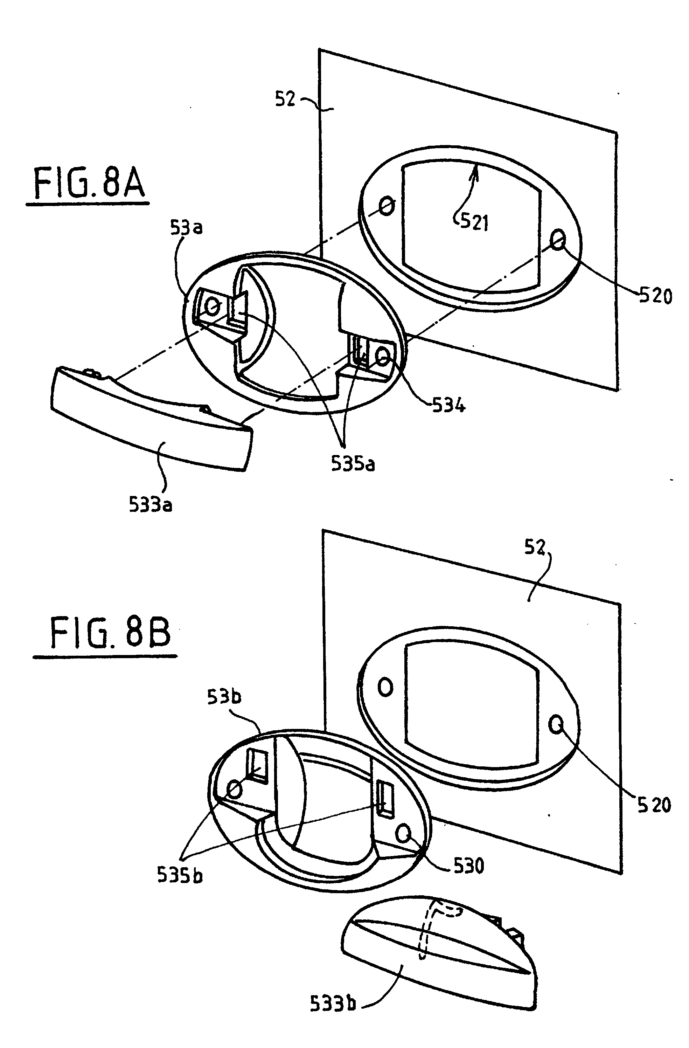

La figure 2 représente une application de ce type du procédé de l'invention dans laquelle on retrouve la découpe (521) permettant la fixation de la partie extérieure CE sur le composant C1 qui est constitué par la commande d'ouverture extérieure (4) laquelle est reliée mécaniquement à la serrure (3) de la portière et l'ensemble étant relié par un lien (21-22) à la platine multifonction (10). La portière comporte une première paroi intérieure (51) pourvue de deux découpes (511-512) à travers lesquelles on peut apercevoir la face intérieure de la paroi extérieure à 52 définissant le volume de la portière dans laquelle la vitre peut s'escamoter. La ligne (510) définit le contour du renfoncement formant les moyens de positionnement de la platine multifonction (10). Le puits de vitre est accessible par le bord inférieur (55) formant le cadre de la portière. Une découpe (56) permet de recevoir le boîtier (3) de serrure. La partie extérieure CE qui vient se fixer sur le composant (4) est représentée figures 8A, 8B et est constituée d'un habillage (53 ou 53B) qui, à l'aide de vis, vient prendre en sandwich la paroi (52) avec le composant C1 et cet habillage (53) est pourvu d'ouvertures (535) permettant le clipsage d'un organe de manoeuvre (533) dans les éléments complémentaires prévus à cet effet dans la commande d'ouverture extérieure de porte constituant le composant C1.

La figure 2 représente un schéma du dispositif permettant la mise en oeuvre du procédé selon l'invention. Le dispositif, selon l'invention, est par exemple, destiné à être monté sur une cassette (1) d'un élément ouvrant d'un véhicule tel qu'une portière ou un hayon. A titre d'exemple, la description est réalisée pour une portière mais reste valable pour un hayon. Une portière de véhicule est constituée, dans sa partie haute, d'un cadre de fenêtre destiné à recevoir une vitre et dans sa partie basse, sous le cadre, d'un volume creux fermé constitué d'une première paroi ou enveloppe extérieure et d'une enveloppe intérieure comportant au moins une ouverture. Le volume creux forme un puits destiné à recevoir la vitre lorsque celle-ci est abaissée. En règle générale, une cassette (1) de portière comprend une paroi (10) destinée à fermer l'ouverture formée dans la paroi intérieure de la portière de façon à délimiter un volume fermé. Selon l'invention, la paroi (10) de la cassette (1) est conformée pour recevoir au moins un moyen (20, 21, 22) de liaison permettant de solidariser au moins un élément (3, 4) intérieur de portière et de bloquer tous les éléments (3, 4) intérieurs en rotation et en translation par rapport à la cassette (1). Ces éléments (3, 4) intérieurs ou composants sont destinés à assurer des fonctions particulières de la portière. A titre d'exemple non limitatif, un premier composant est constitué, par exemple, du mécanisme (3) de la serrure de la portière, et un deuxième composant est constitué de la partie technique de la commande extérieure d'ouverture (4), par la suite appelée "COE". Les moyens (20, 21, 22) de liaison sont conformés pour, soit ne pas occuper l'espace destiné à la vitre, ou puits de la portière, soit pour pouvoir être enlevés ou escamotés s'ils entravent le puits de la portière. Ainsi, les moyens (20, 21, 22) de liaison comprennent, d'une part au moins un moyen (21, 22) de liaison fixe permettant de solidariser les composants (3, 4) de portière à la paroi (10) de la cassette (1) et n'obturant pas le puits de portière, et d'autre part au moins un moyen (20) de liaison amovible ou escamotable permettant le blocage en rotation et en translation du composant (4) destiné à être monté à l'intérieur de la paroi externe de la portière.

Les moyens (21, 22) de liaison fixe comprennent, par exemple, au moins une patte (21, 22) ou languette de fixation. Chaque patte (21, 22) comprend, d'une part des moyens de montage avec au moins un composant (3, 4) de portière, et d'autre part des moyens de montage, soit sur la cassette (1), soit sur un autre moyen de liaison. Dans l'exemple de réalisation de la figure 1, une première patte (21) montée sur la paroi (10) de la cassette (1) assure la solidarisation du mécanisme (3) de la serrure de la portière, et une deuxième patte (12) montée sur la première patte (21) assure la solidarisation de la serrure à la partie technique de la commande extérieure (4) d'ouverture. Ainsi, ces pattes (21, 22) assurent une solidarisation des composants (3, 4) de portière avec la cassette (1) et permettent donc une mise en place aisée des composants (3, 4) dans la portière, destinés, par la suite, à être montés sur celle-ci. Ces pattes (21, 22) sont conformées pour ne pas pénétrer dans le puits (54) de portière. Cependant, compte tenu de la contrainte liée à la libération du puits de portière, pour le passage de la vitre (6), le positionnement puis le blocage complet en translation et en rotation des composants (3, 4) par rapport à la cassette (1) doivent être assurés pour éviter tout risque de décalage, lors du montage définitif des composants (3, 4) dans la portière. Pour ce faire, le blocage est assuré par au moins un moyen (20) de liaison amovible ou escamotable, décrit en détails ultérieurement. Dans l'exemple de réalisation représenté figure 1, le moyen (20) de liaison amovible est constitué d'un barreau (20) solidaire, d'une part de la commande extérieure (4) d'ouverture, et d'autre part de la paroi (10) de la cassette (1). La liaison entre le barreau (20) et la paroi (10) de la cassette (1) est assurée, par exemple, par une languette (12) pourvue d'un perçage. La languette est formée dans une découpe (11) de la paroi (10). Le perçage, de dimension et géométrie déterminées, peut être pratiqué directement dans la paroi (10). Le barreau (20) est alors engagé dans le perçage (12) de la paroi (10), et dans un second perçage (41) pratiqué sur une partie de la commande extérieure d'ouverture (4). Ainsi, une fois les composants (3, 4) solidarisés à la paroi (10) de la cassette (1) par l'intermédiaire des pattes (21, 22), ce barreau (20) assure le blocage des composants (3, 4) dans une position optimale pour leur fixation dans la portière. Le montage de ce barreau (20) sur la cassette et sur la partie technique de la commande extérieure (4) d'ouverture est tel qu'un opérateur peut retirer le barreau (20), une fois tous les composants (3, 4) montés dans la portière, par l'intermédiaire d'un moyen (201) de préhension situé sur une première extrémité du barreau (20) et en saillie par rapport à la face extérieure de la paroi (10) de la cassette (1).

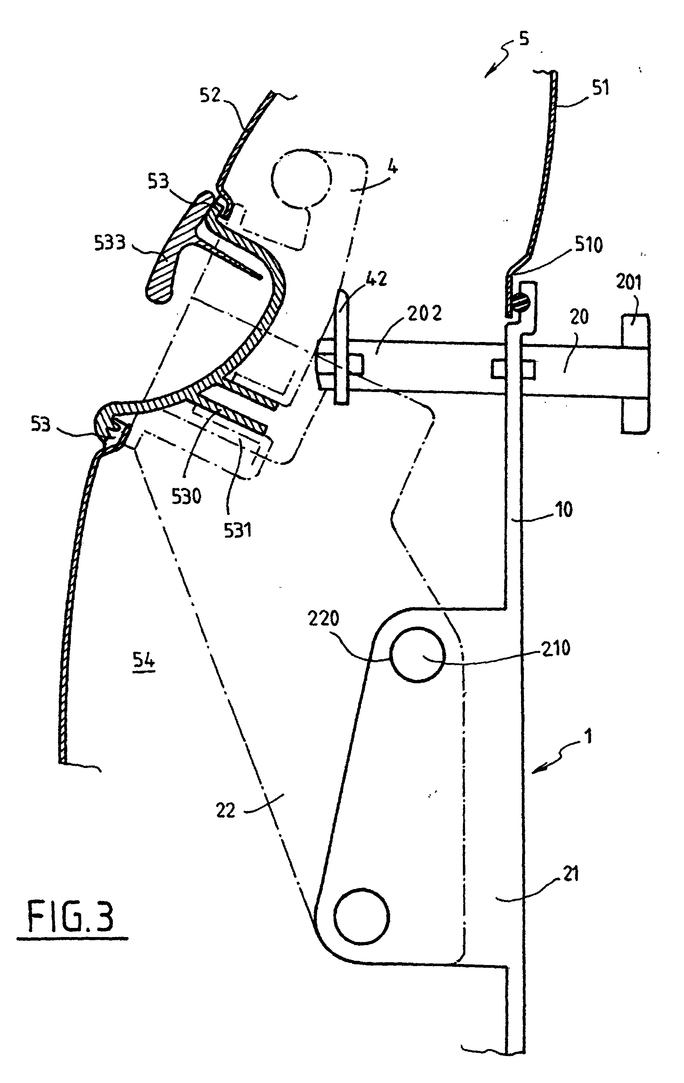

La figure 3 représente une vue en coupe transversale d'une première variante de réalisation du dispositif selon l'invention. Dans cette représentation, la cassette (1) est montée sur la paroi (51) intérieure d'une portière (5), découpée selon au moins une ouverture. Un élément (53) décoratif ou partie extérieure de la commande d'ouverture de la porte comportant la poignée ou palette (533) de commande de la partie (4) technique de la COE, permettant d'ouvrir la portière (50) et un habillage décoratif, est, par exemple, monté sur la partie externe de la paroi (52) extérieure de cette portière (5). Cette partie extérieure (53) comprend également des moyens (530) permettant le montage de la commande extérieure d'ouverture (COE) (4) dans la portière (5), et comportant à cet effet, des moyens (42) complémentaires de montage sur la partie extérieure (53). La partie extérieure (53) comprend des moyens (533) pour permettre la fixation sur la paroi extérieure (52) de la portière (5) et des moyens de montage de la palette (533b). La paroi (52) extérieure peut comprendre un embouti permettant le positionnement et/ou le centrage de la partie extérieure (53), lors de son montage. La paroi (52) extérieure comprend également des perçages destinés au passage d'éléments de fixation de la COE sur la partie extérieure, de sorte qu'une fois le montage effectué, la paroi (52) est prise entre la partie extérieure (53) et la COE (4), ce qui permet la solidarisation de la COE. Les éléments de fixation comprennent, par exemple, des broches qui permettent également le positionnement de la COE (4). La liaison mécanique entre la partie extérieure (53) et la COE (4) est alors réalisée par des vis vissées dans les broches. Les moyens (530) de montage de la COE ainsi que les moyens (42) complémentaires de montage sont situés dans le volume (54) intérieur de la portière délimité par les deux parois (51, 52) de celle-ci. Ces moyens (530, 42) de montage de la COE comprennent, par exemple, sur la partie extérieure (53), des puits (530) de vis conformés pour pénétrer dans des broches (531) réalisées sur la COE, la liaison entre la partie extérieure et la COE (4) étant assurée alors par des vis adaptées aux puits (530) de vis de la partie extérieure (53). Dans cette première variante de réalisation, la première patte (21) fait, par exemple, partie intégrante de la paroi (10) de la cassette (1) et fait saillie dans le volume (54) intérieur de la portière (5). Cette première patte (21) comprend, par exemple, deux perçages (210) destinés au montage de la deuxième patte (22) par l'intermédiaire d'un système vis/écrou, la deuxième patte (22) comportant alors deux perçages (220) complémentaires. Dans cette première variante de réalisation, les moyens (20) de liaison amovible sont également constitués d'un barreau dont la deuxième extrémité (202) collabore avec, par exemple, une languette (41) solidaire de la COE (4) pour assurer le blocage en translation et en rotation de tous les composants intérieurs de la portière. La liaison entre le barreau (20) et d'une part la languette (41) de la COE (4), et d'autre part la paroi (10) de la cassette (1) sera décrite ultérieurement.

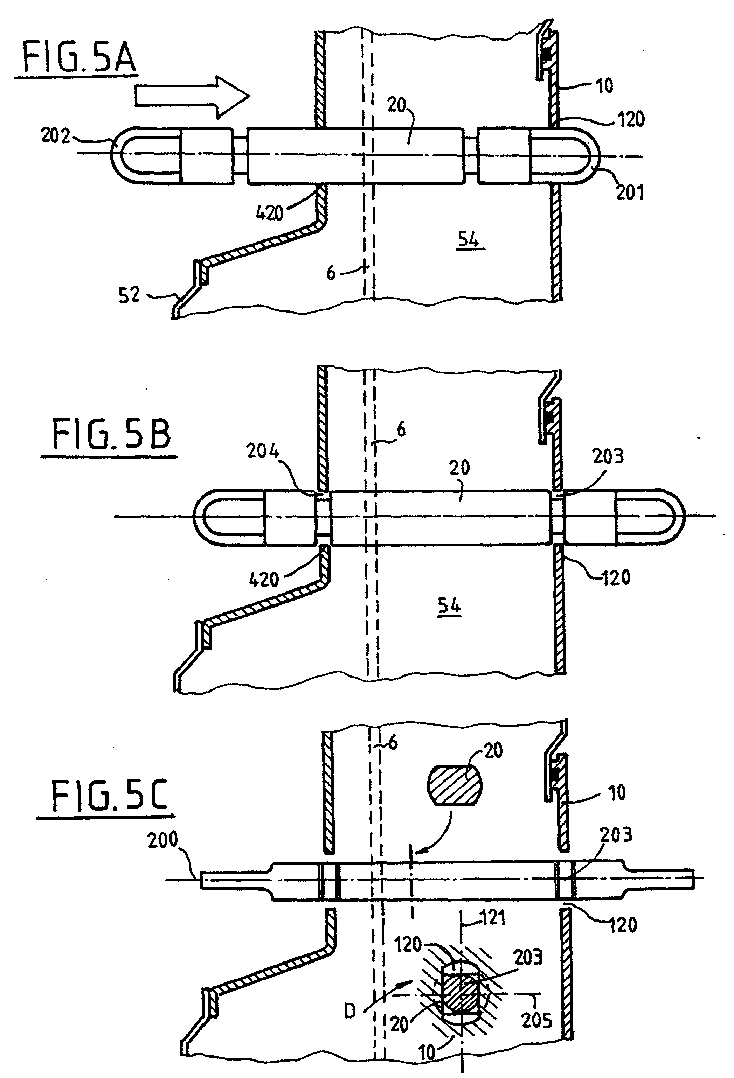

La figure 4 représente un exemple de réalisation d'un moyen de liaison amovible. Comme expliqué précédemment, un moyen de liaison amovible est, par exemple, constitué d'un barreau (20). Ce barreau (20) est, par exemple, constitué d'une barre cylindrique sur laquelle sont pratiqués deux méplats parallèles. Les dimensions et la géométrie de la section du barreau (20) sont sensiblement identiques aux dimensions et géométrie du perçage de la languette ou du perçage (12) de la paroi (10, fig. 2) de la cassette (1), et du perçage (41, fig. 2) de la COE ou du perçage de la languette (42, fig. 3) de la COE. Chaque extrémité (201, 202) du barreau (20) comprend des moyens (201, 202) de préhension ou de manipulation constitués, par exemple, d'une anse (201, 202). Ce barreau (20) comprend également des moyens de verrouillage (203, 204) destinés à assurer le montage et le démontage du barreau (20) sur la cassette et, par exemple, la COE ou une languette de la COE. Ces moyens de verrouillage (203, 204) comprennent, par exemple, deux saignées pratiquées sur toute la circonférence du corps du barreau (20). L'épaisseur de chaque saignée (203, 204) correspond sensiblement à l'épaisseur de la paroi (10, fig. 2) de la cassette et à l'épaisseur de la languette de la COE. Les dimensions des saignées (203, 204) sont choisies pour que la section du barreau (20) soit cylindrique à leur niveau. Le diamètre du cylindre, par ailleurs, est inférieur ou égal l'épaisseur du barreau (20).

Les figures 5A à 5C représentent les différentes étapes de mise en place et d'enlèvement du moyen de liaison amovible de l'exemple de réalisation de la figure 4. Le barreau (20) est, dans un premier temps, représenté figure 5A, introduit entre la paroi (10) de la cassette, et par exemple une languette (42) de la COE, par le perçage de la paroi (10) de la cassette, et par le perçage (420) de la languette (42). L'introduction du barreau (20) peut être réalisée soit en commençant par introduire le barreau (20) par le perçage (120) de la paroi (10), soit en commençant par introduire le barreau (20) par le perçage (420) de la languette (42). L'introduction du barreau (20), représentée figure 5B, est réalisée jusqu'à ce que la première (203), respectivement la deuxième saignées (204) soient en face du perçage (120) de la paroi (10), respectivement du perçage (420) de la languette (42). A ce stade, le barreau (20) peut donc tourner sur son axe (200) longitudinal. En effet, au niveau des saignées (203, 204), les dimensions du barreau (20) sont inférieures aux dimensions respectives du perçage (120) de la paroi (10) et du perçage (420) de la languette (42). Ainsi, la figure 5C représente le barreau (20), après qu'un opérateur l'ait fait tourner d'un quart de tour selon n'importe quel sens. Une fois la rotation exécutée, le barreau (20) est bloqué en translation puisque, comme le montre la coupe (D) transversale réalisée au niveau de la première saignée, l'axe longitudinal (205) de la section du barreau (20) n'est plus parallèle à l'axe longitudinal (121) du perçage (120) de la paroi (10). Dans cette position, le barreau (20) est verrouillé entre la paroi (10) et la COE et assure donc le montage et le blocage en translation et en rotation de la COE par rapport à la cassette, ce qui facilite le montage de la COE et éventuellement, des autres composants de la portière. Pour enlever le barreau (20) et ainsi libérer le puits (54) de la portière, il suffit de faire tourner le barreau (20) d'un nouveau quart de tour pour que l'axe longitudinal de la section du barreau (20) soit parallèle à l'axe longitudinal du perçage (120) de la paroi (10). Une fois la rotation exécutée, on se retrouve dans la configuration représentée figure 5B. Alors, le barreau (20) n'est plus bloqué en translation et peut être retiré, par exemple, dans le sens inverse de celui où il a été introduit.

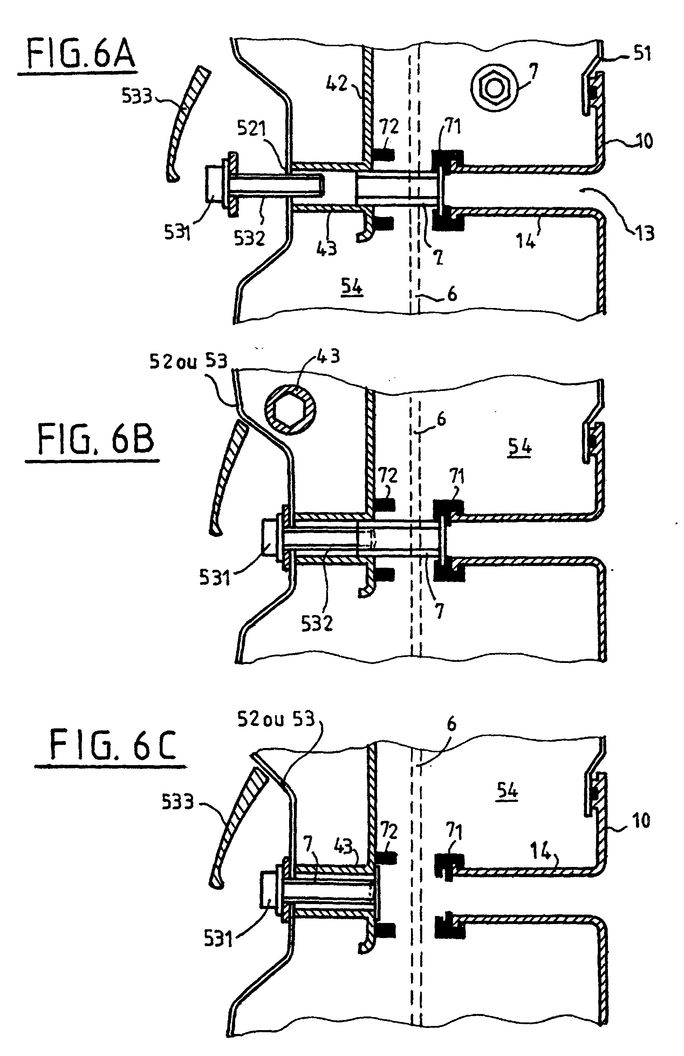

Les figures 6A à 6C représentent les différentes étapes de mise en place et d'escamotage d'une première variante de réalisation d'un moyen de liaison escamotable. Dans cette variante de réalisation, le moyen de liaison assurant le blocage en rotation et en translation n'est pas amovible mais est escamotable, c'est-à-dire qu'il n'est pas retiré une fois les composants de porte montés dans la portière, mais simplement manoeuvré pour libérer le puits (54) de portière. A cet effet, la paroi (10) de la cassette comprend une ouverture (13) prolongée vers le puits (54) de la portière par un tube (14). L'extrémité de ce tube (14) situé à l'intérieur du puits (54), comprend un joint (71) dans lequel est emboîtée une première extrémité d'un écrou (7), ou manchon taraudé, dont la deuxième extrémité est engagée dans une première extrémité d'un manchon (43) pratiqué dans la languette (42) ou extension de la COE. La géométrie et les dimensions du manchon (43) sont sensiblement identiques à la géométrie et aux dimensions de l'écrou (7) de sorte que le seul mouvement de l'écrou (7) dans le manchon (43) soit le coulissement. La deuxième extrémité du manchon (43) est en vis-à-vis d'un perçage (521) pratiqué dans la paroi (52) extérieure de la portière et destiné à recevoir une vis (531) permettant la fixation, sur la paroi (52) extérieure de la portière, de la partie extérieure (53) sur laquelle est montée la palette (533b). La figure 6A représente l'étape de positionnement d'un composant de portière, par exemple, la COE. Comme expliqué précédemment, la COE est montée sur la paroi (10) de la cassette par l'intermédiaire, notamment de l'écrou (7). Puis, la cassette est montée dans la portière. L'étape suivante, pour la variante de réalisation représentée sur les figures 6A à 6C, consiste à fixer la COE à la portière et à monter la partie extérieure (534) sur la paroi (52) extérieure de la portière. Cette étape, représentée figure 6B, consiste, dans un premier temps, à engager le barreau (532) fileté de la vis (531) de fixation de la partie extérieure (53) dans le manchon (43) de la languette (42), puis dans l'écrou (7). Lorsque la vis (531) est engagée de cette manière, la tête de vis est alors en butée contre la paroi (52) extérieure de la portière. La dernière étape, représentée figure 6C, consiste à visser la vis (531). Cette opération provoque alors le coulissement de l'écrou (7) dans le manchon (43) vers la paroi (52), puisque la tête de vis (531) est en butée contre la paroi (52) extérieure de la portière. Le coulissement de l'écrou (7) provoque alors la libération du puits (54) de la portière dans lequel la vitre (6) peut coulisser. Un deuxième joint (72) peut, par exemple, être fixé sur la languette (42) en vis-à-vis du joint (71) du manchon (14) de la paroi (10) de la cassette. Ces deux joints (71, 72) assurent une protection de la vitre (6) contre les éventuels chocs.

Cette première variante de réalisation permet donc la fixation de la partie extérieure et le montage de la COE dans la portière par une opération de vissage réalisée par la paroi (52) extérieure de la portière.

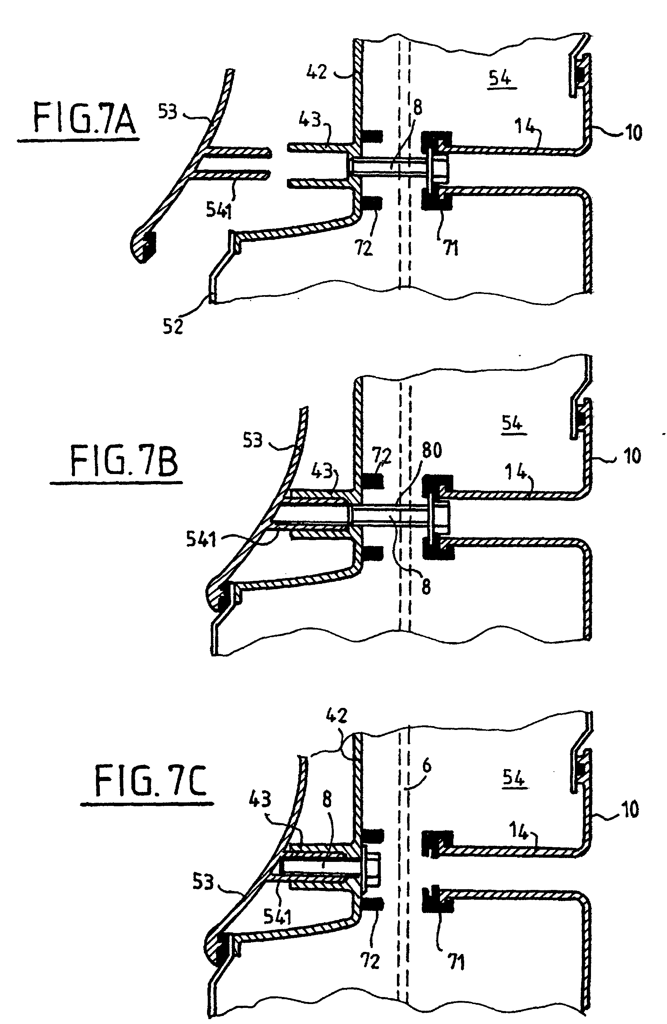

Les figures 7A à 7C représentent les différentes étapes de mise en place et d'escamotage d'une deuxième variante de réalisation d'un moyen de liaison escamotable. Cette deuxième variante de réalisation permet la fixation de la partie extérieure (53) et le montage de la COE dans la portière par une opération de vissage réalisée par la paroi (10) de la cassette. A cet effet, la paroi (10) de la cassette reste inchangée par rapport à celle de la première variante. En revanche, l'écrou est remplacé par une vis (8) dont la tête de vis est accessible par le tube (14) de la paroi (10). La languette (42) reste également inchangée par rapport à la première variante. En revanche, le contact entre la COE et la paroi (52) extérieure de la portière n'est plus assuré par la deuxième extrémité du manchon (43), mais par une extension (44) de la languette (42). Dans cette deuxième variante, la partie extérieure (53) est, par exemple, un boîtier décor qui masque une ouverture pratiquée dans la paroi (52) extérieure de la portière. La partie extérieure (53) comprend, sur sa face non visible de l'extérieur, un manchon (541) dont les dimensions et la géométrie permettent son emboîtement dans le manchon (43) de la languette (42) de la COE. Ainsi, après le montage de la COE sur la paroi (10) de la cassette, représenté figure 7A, et réalisé de façon similaire à la première variante de réalisation, la partie extérieure (53) est solidarisée avec la COE. Cette solidarisation, représentée figure 7B, consiste à emmancher le manchon (541) de la partie extérieure (53) dans le manchon (43) de la languette (42) de la COE. Une fois solidarisée, la partie extérieure (53) est alors en appui contre la paroi (52) extérieure de la portière et l'extrémité du barreau (80) est engagée dans le manchon (541) de la partie extérieure (53). La fixation définitive de la partie extérieure (53), ainsi que la libération du puits (54), représentées figure 7C, sont obtenues en vissant la vis (8) dans le manchon (541) de la partie extérieure (53) équipée à cet effet, par exemple, d'un insert taraudé. Ainsi, une fois l'opération de vissage terminée, la vis (8) est complètement engagée dans le manchon (541) de la partie extérieure (53) de sorte que, d'une part la tête de vis est en appui contre la languette (42) de la COE, et d'autre part la vis (8) a libéré le puits (54) de la portière. Deux joints (71, 72) identiques aux joints décrits pour la première variante sont, par exemple, également mis en place.

Les figures 8A et 8B représentent une première, respectivement une deuxième, variantes de réalisation d'un boîtier extérieur ou partie extérieure d'une commande d'ouverture de porte. Comme décrit précédemment, la partie extérieure (53a, 53b) est montée sur la paroi (52) extérieure de la portière par l'intermédiaire de moyens de montage comprenant, d'une part sur la partie extérieure (53a, 53b), au moins deux puits (534) de vis, et d'autre part, sur la paroi (52) de la portière, des perçages (520) correspondants. Ces perçages (520) permettent également le montage de la COE sur la partie extérieure (53a, 53b), par exemple, par l'intermédiaire de broches de positionnement et de vis. La partie extérieure (53a, 53b) comprend également des moyens (535a, 535b) pour permettre la liaison de la palette (533a, 533b) à la commande d'ouverture extérieure (COE). Dans la première variante, la palette (533a) est destinée à pivoter suivant un axe vertical, alors que dans la deuxième variante, la palette (533b) est destinée à pivoter suivant un axe horizontal.

Ainsi, comme il vient d'être décrit, le procédé selon l'invention comprend, tout d'abord, une étape dans laquelle les composants ou éléments intérieurs d'une portière sont montés sur la cassette. Ceci permet dans une deuxième étape d'insérer et de monter cet ensemble dans la portière. Enfin, une dernière étape consiste à libérer le puits de portière, soit en retirant le moyen amovible, soit en escamotant le moyen de liaison assurant le blocage en rotation et en translation. Les variantes de réalisation représentées aux figures 6A à 6C, et 7A à 7C, permettent de réaliser l'étape de montage des composants dans la portière et la libération du puits de manière simultanée.

On conçoit que le procédé et le dispositif selon l'invention, permettent de faciliter l'opération de montage de composants à l'intérieur d'une portière. En effet, tous les composants peuvent être positionnés en vue de leur montage en aveugle dans la portière en une seule opération qui consiste à insérer, dans la portière, la cassette préalablement équipée des différents composants. Enfin, les différentes variantes de réalisation des moyens de liaison amovible ou escamotable dépendent, d'une part de la configuration des composants et de la portière, et d'autre part du choix de l'utilisateur quant à la réutilisation ou non des moyens de liaison permettant le blocage de tous les composants.

Il est clair que d'autres modifications à la portée de l'homme du métier entrent dans le cadre de l'invention.

## Revendications

1. Procédé de montage en aveugle d'au moins un composant destiné à être mis en place dans un logement difficilement accessible comprend :
- une étape de liaison tridimensionnelle du composant par un lien avec une platine multifonction;
- une étape de formation de moyens de positionnement de la platine multifonctionnelle dans une première paroi pourvue d'au moins un trou permettant le passage du lien et du composant, le dit lien positionnant dans l'espace le composant pour qu'après positionnement de la platine, le composant soit en place dans le logement;
- une étape de fixation de composants supplémentaires sur le composant

2. Procédé de montage selon la revendication 1, **caractérisé en ce qu'**il comprend un logement solidaire d'une deuxième paroi.

3. Procédé de montage selon la revendication 2, **caractérisé en ce qu'**il comprend une seconde paroi formant avec la première un volume.

4. Procédé de montage selon une des revendications 1 à 3, **caractérisé en ce qu'**il comprend des composants complémentaires qui sont un composant d'habillage et un composant de manoeuvre.

5. Procédé de montage selon la revendication 3, **caractérisé en ce qu'**il comprend un volume qui est un ouvrant de véhicule.

6. Procédé de montage selon une des revendications 1 à 5, **caractérisé en ce qu'**il comprend une liaison tridimensionnelle rigide en X et Z et rigidifiable en Y par une clé.

7. Procédé de montage selon une des revendications 1 à 6, **caractérisé en ce qu'**il comprend une platine multifonctionnelle qui est une cassette de porte de véhicule.

8. Procédé de montage, selon la revendication 5, en aveugle d'un composant dans un volume constituant un élément ouvrant formé d'une première paroi (52) extérieure et d'une deuxième paroi (1) intérieure **caractérisé en ce qu'**il comprend
- une étape de rigidification d'un composant sur - une cassette multifonction (10),
- une étape de fixation de la cassette dans un logement prévu sur la deuxième paroi et de positionnement d'un composant (3, 4) sur la face interne, de la paroi (52) extérieure de l'élément ouvrant,
- une étape de suppression de la rigidification
- une étape de montage des composants extérieurs de manoeuvre et d'habillage.

9. Procédé de montage selon la revendication 8, **caractérisé en ce que** l'élément ouvrant est une portière ou un hayon, l'espace de suppression de la rigidification libère l'espace entre les deux parois formant un puits (54), pour un élément mobile tel qu' une vitre (6), pour un des composants (3, 4) destiné à être monté, est la partie technique d'une commande extérieure (4) d'ouverture.

10. Procédé de montage selon la revendication 8 ou 9, **caractérisé en ce qu'**il comprend une étape de montage de la partie extérieure (53) de la commande d'ouverture de porte comprenant un organe de manoeuvre et/ou un habillage à l'extérieur de la portière, le montage étant réalisé par fixation sur la commande d'ouverture extérieure (4) pour enserrer la paroi (52) entre la partie extérieure (53) et la partie technique de la commande (4) extérieure d'ouverture.

11. Procédé de montage selon l'une des revendications 8, **caractérisé en ce que** l'étape de rigidification est assurée par un moyen de liaison amovible comprend un barreau (20) comportant des moyens (203, 204) permettant son verrouillage, d'une part sur la seconde paroi (1), et d'autre part sur un des composants (4) destiné à être monté à l'intérieur du volume (5), ces moyens (203, 204) de verrouillage étant déverrouillables une fois le composant (4) mis en place et fixé dans le volume (5), afin de libérer l'espace (53) entre les deux parois du volume.

12. Procédé de montage selon l'une des revendications 8 à 11, **caractérisé en ce que** l'étape de montage et de solidarisation de l'ensemble formé par la cassette (1) et tous les éléments (3, 4) intérieurs à l'intérieur d'une portière (5) de véhicule consiste, d'une part à solidariser chaque élément (3,4) aux parois (52) de la portière, et d'autre part à solidariser, lorsque cela est nécessaire, au moins un mécanisme de chaque élément (4) à un mécanisme de la cassette (1).

13. Dispositif de montage d'au moins un composant **caractérisé en ce qu'**il comprend des moyens (7, 8, 20, 21, 22) de liaison amovible du ou des composants (3, 4) à une cassette (1) destinée à être montée à l'intérieur d'un élément ouvrant de véhicule, les moyens (7, 8, 20, 21, 22, 23) de liaison amovible étant conformés pour assurer le blocage en rotation et en translation par rapport à la cassette (1) du ou des composants (3, 4) à monter à l'intérieur de l'élément ouvrant.

14. Dispositif de montage selon la revendication 13, **caractérisé en ce qu'**un moyen de liaison amovible comprend un barreau (20) comportant des moyens (203, 204) permettant son verrouillage, d'une part sur la cassette (1), et d'autre part sur un des composants(4), ces moyens (203, 204) de verrouillage étant déverrouillables une fois tous les composants(4) mis en place dans la portière afin de libérer le puits (54).

15. Dispositif de montage selon la revendication 13, **caractérisé en ce qu'**un moyen de liaison escamotable comprend un manchon (7) taraudé assurant par des moyens (14, 42) de solidarisation, la liaison entre la cassette (1) et un composant (4) intérieur, le taraudage du manchon (7) étant destiné à collaborer avec une vis (531) de fixation d'un des éléments (4) intérieurs, l'escamotage du manchon (7) étant obtenu par vissage de la vis (531) de fixation lors de la solidarisation de l'élément intérieur (4) sur la portière (5).

16. Dispositif de montage selon l'une des revendications 13 à 15, **caractérisé en ce que** les composants (3, 4) intérieurs de portière comprennent, d'une part la partie technique d'une commande extérieure d'ouverture (4) destinée à être solidarisée à la surface intérieure de la tôle formant la paroi extérieure de la portière, par l'intermédiaire d'une partie extérieure (53) positionnée sur un embouti de la surface extérieure de la tôle et des moyens de fixation assurant la liaison mécanique entre la partie extérieure et la partie technique commande (4) extérieure d'ouverture, et/ou d'autre part le mécanisme (3) de serrure de la portière.

17. Dispositif de montage selon l'une des revendications 13 à 16, **caractérisé en ce qu'**il comprend une partie extérieure constituée d'un habillage et d'un organe de préhension.

18. Dispositif de montage d'au moins un élément intérieur de portière de véhicule selon la revendication 10, **caractérisé en ce que** la paroi extérieure (52) de la portière comprend un renfoncement ou une découpe de centrage de la partie extérieure (53), cette dernière comportant des puits (530) de centrage qui pénètrent dans des broches de la commande d'ouverture extérieure, les puits recevant une vis de liaison de la partie extérieure (53) avec la partie technique de la commande extérieure (4) d'ouverture .

## Patentansprüche

1. Verfahren zur Blindmontage mindestens eines Bauteils, das in einer schwierig zugänglichen Aufnahme angebracht werden soll, umfassend:
- einen Schritt der dreidimensionalen Verbindung des Bauteils mit einer Multifunktionsplatte durch ein Verbindungsglied;
- einen Schritt des Bildens von Mitteln zur Positionierung der Multifunktionsplatte in einer ersten Wand, die mit mindestens einem Loch versehen ist, welches den Durchgang des Verbindungsgliedes und des Bauteils ermöglicht, wobei das Verbindungsglied in dem Raum das Bauteil positioniert, damit das Bauteil nach der Positionierung der Platte in der Aufnahme angeordnet ist;
- einen Schritt der Befestigung von zusätzlichen Bauteilen an dem Bauteil.

2. Montageverfahren nach Anspruch 1, **dadurch gekennzeichnet, daß** es eine mit einer zweiten Wand fest verbundene Aufnahme umfaßt.

3. Montageverfahren nach Anspruch 2, **dadurch gekennzeichnet, daß** es eine zweite Wand umfaßt, die mit der ersten ein Volumen bildet.

4. Montageverfahren nach einem der Ansprüche 1 bis 3, **dadurch gekennzeichnet, daß** es komplementäre Bauteile umfaßt, die ein Verkleidungsbauteil und ein Betätigungsbauteil sind.

5. Montageverfahren nach Anspruch 3, **dadurch gekennzeichnet, daß** es ein Volumen umfaßt, das eine Fahrzeugöffnung ist.

6. Montageverfahren nach einem der Ansprüche 1 bis 5, **dadurch gekennzeichnet, daß** es eine in X und Z steife und in Y durch einen Schlüssel versteifbare dreidimensionale Verbindung umfaßt.

7. Montageverfahren nach einem der Ansprüche 1 bis 6, **dadurch gekennzeichnet, daß** es eine Multifunktionsplatte umfaßt, die ein Fahrzeugtürkasten ist.

8. Blindmontageverfahren nach Anspruch 5 für ein Bauteil in einem Volumen, das ein zu öffnendes Element bildet, welches aus einer ersten, äußeren Wand (52) und einer zweiten, inneren Wand (1) besteht, **dadurch gekennzeichnet, daß** es. umfaßt:
- einen Schritt der Versteifung eines Bauteils an einem Multifunktionskasten (10),
- einen Schritt der Befestigung des Kastens in einer an der zweiten Wand vorgesehen Aufnahme und der Positionierung eines Bauteils (3, 4) an der Innenseite der äußeren Wand (52) des zu öffnenden Elements,
- einen Schritt der Unterdrückung der Versteifung,
- einen Schritt der Montage der äußeren Betätigungs- und Verkleidungsbauteile.

9. Montageverfahren nach Anspruch 8, **dadurch gekennzeichnet, daß** das zu öffnende Element eine Tür oder eine Heckklappe ist, der Raum zur Unterdrückung der Versteifung den Raum zwischen den zwei Wänden freigibt, die einen Schacht (54) für ein bewegliches Element wie eine Fensterscheibe (6) bilden, und eines der Bauteile (3, 4), das zur Montage vorgesehen ist, der technische Teil einer äußeren Öffnungssteuerung (4) ist.

10. Montageverfahren nach Anspruch 8 oder 9, **dadurch gekennzeichnet, daß** es einen Schritt der Montage des äußeren Teils (53) der Türöffnungssteuerung mit einer Betätigungseinrichtung und/oder einer Verkleidung am Äußeren der Tür umfaßt, wobei die Montage durch Befestigung an der äußeren Öffnungssteuerung (4) ausgeführt wird, um die Wand (52) zwischen den äußeren Teil (53) und den technischen Teil der äußeren Öffnungssteuerung (4) einzuspannen.

11. Montageverfahren nach Anspruch 8, **dadurch gekennzeichnet, daß** der Schritt der Versteifung durch ein lösbares Verbindungsmittel mit einer Stange (20) gewährleistet wird, die Mittel (203, 204) aufweist, die ihre Verriegelung einerseits an der zweiten Wand (1) und andererseits an einem der Bauteile (4), das im Inneren des Volumens (5) montiert werden soll, ermöglichen, wobei diese Mittel (203, 204) zur Verriegelung entriegelbar sind, sobald das Bauteil (4) im Volumen (5) angebracht und befestigt ist, um den Raum (53) zwischen den zwei Wänden des Volumens freizugeben.

12. Montageverfahren nach einem der Ansprüche 8 bis 11, **dadurch gekennzeichnet, daß** der Schritt der Montage und der festen Verbindung der durch den Kasten (1) und alle inneren Elemente (3, 4) im Inneren einer Fahrzeugtür (5) gebildeten Baugruppe einerseits aus dem festen Verbinden jedes Elements (3, 4) mit den Wänden (52) der Tür und andererseits aus dem festen Verbinden, wenn dies erforderlich ist, mindestens eines Mechanismus jedes Elements (4) mit einem Mechanismus des Kastens (1) besteht.

13. Vorrichtung zur Montage mindestens eines Bauteils, **dadurch gekennzeichnet, daß** sie Mittel (7, 8, 20, 21, 22) zur lösbaren Verbindung des Bauteils oder der Bauteile (3, 4) mit einem Kasten (1) aufweist, der im Inneren eines zu öffnenden Elements eines Fahrzeugs montiert werden soll, wobei die Mittel (7, 8, 20, 21, 22, 23) zur lösbaren Verbindung ausgebildet sind, um die Blockierung der Rotation und der Translation bezüglich des Kastens (1) des Bauteils oder der Bauteile (3, 4), die im Inneren des zu öffnenden Elements montiert werden sollen, zu gewährleisten.

14. Montagevorrichtung nach Anspruch 13, **dadurch gekennzeichnet, daß** ein Mittel zur lösbaren Verbindung eine Stange (20) mit Mitteln (203, 204) aufweist, die ihre Verriegelung einerseits am Kasten (1) und andererseits an einem der Bauteile (4) ermöglichen, wobei diese Mittel (203, 204) zur Verriegelung entriegelbar sind, sobald alle Bauteile (4) in der Tür angebracht sind, um den Schacht (54) freizugeben.

15. Montagevorrichtung nach Anspruch 13, **dadurch gekennzeichnet, daß** ein versenkbares Verbindungsmittel eine mit Gewinde versehene Muffe (7) aufweist, die durch Mittel (14, 42) zur festen Verbindung die Verbindung zwischen dem Kasten (1) und einem inneren Bauteil (4) gewährleistet, wobei das Innengewinde der Muffe (7) vorgesehen ist, um mit einer Schraube (531) zur Befestigung eines der inneren Elemente (4) zusammenzuarbeiten, wobei das Versenken der Muffe (7) durch Verschraubung der Befestigungsschraube (531) bei der festen Verbindung des inneren Elements (4) an der Tür (5) erhalten wird.

16. Montagevorrichtung nach einem der Ansprüche 13 bis 15, **dadurch gekennzeichnet, daß** die inneren Bauteile (3, 4) der Tür einerseits den technischen Teil einer äußeren Öffnungssteuerung (4), der mit der Innenfläche des Blechs, das die Außenwand der Tür bildet, durch einen äußeren Teil (53), der an einem Stulpblech der Außenfläche des Blechs angeordnet ist, und durch Befestigungsmittel, die die mechanische Verbindung zwischen dem äußeren Teil und dem technischen Teil der äußeren Öffnungssteuerung (4) gewährleisten, fest verbunden werden soll, und/oder andererseits den Schließmechanismus (3) der Tür aufweisen.

17. Montagevorrichtung nach einem der Ansprüche 13 bis 16, **dadurch gekennzeichnet, daß** sie einen äußeren Teil aufweist, der aus einer Verkleidung und einer Greifeinrichtung besteht.

18. Vorrichtung zur Montage mindestens eines inneren Elements einer Fahrzeugtür nach Anspruch 10, **dadurch gekennzeichnet, daß** die Außenwand (52) der Tür eine Einbuchtung oder einen Ausschnitt zur Zentrierung des äußeren Teils (53) aufweist, wobei dieser letztere Schächte (530) zur Zentrierung aufweist, die in Stifte der äußeren Öffnungssteuerung eindringen, wobei die Schächte eine Schraube zur Verbindung des äußeren Teils (53) mit dem technischen Teil der äußeren Öffnungssteuerung (4) aufnehmen.

## Claims

1. Method of blind assembly of at least one component intended to be positioned in a housing that is difficult to access comprises:
- a step of three-dimensional linking of the component by a link with a multi-functional plate;
- a step of formation of means for positioning the multi-functional plate in a first wall equipped with at least one hole allowing the link and the component to pass through, said link positioning the component in space so that, after positioning of the plate, the component is in place in the housing;
- a step of fixing additional components to the component.

2. Method of assembly according to Claim 1, **characterised in that** it comprises a housing integral with a second wall.

3. Method of assembly according to Claim 2, **characterised in that** it comprises a second wall forming a volume together with the first one

4. Method of assembly according to one of Claims 1 to 3, **characterised in that** it comprises additional components which are a trim component and a manoeuvring component.

5. Method of assembly according to Claim 3, **characterised in that** it comprises a volume that is a vehicle opening.

6. Method of assembly according to one of Claims 1 to 5, **characterised in that** it comprises a three-dimensional link that is rigid in the X and Z axes and capable of being rigidified in the Y axis with a key.

7. Method of assembly according to one of Claims 1 to 6, **characterised in that** it comprises a multi-functional plate that is a cassette for a vehicle door.

8. Method of blind assembly, according to Claim 5, of a component within a volume constituting an opening element formed of a first outer wall (52) and a second inner wall (1) **characterised in that** it comprises:
- a step of rigidifying a component on a multi-functional cassette (10),
- a step of fixing the cassette in a housing provided on the second wall and of positioning a component (3, 4) on the inner face of the outer wall (52) of the opening element,
- a step of eliminating the rigidification
- a step of assembling the outer manoeuvring and trim components.

9. Method of assembly according to Claim 8, **characterised in that** the opening element is a door or a tailgate, the space for eliminating rigidification releases space between the two walls forming a well (54), for a mobile element such as a window (6), for one of the components (3, 4) intended to be assembled, is the technical part of an outer control (4) of an opening.

10. Method of assembly according to Claim 8 or 9, **characterised in that** it comprises a step of assembling the outer part (53) of the door opening control comprising a manoeuvring member and/or a trim outside the door, the assembly being carried out by fixing to the outer opening control (4) in order to enclose the wall (52) between the outer part (53) and the technical part of the outer opening control (4).

11. Method of assembly according to one of Claims 8, **characterised in that** the step of rigidification is performed by a removable linking means comprises a bar (20) having means (203, 204) allowing it to be locked, both to the second wall (1), and to one of the components (4) intended to be mounted inside the volume (5), these locking means (203, 204) being unlockable once the component (4) is positioned and fixed inside the volume (5), so as to release the space (53) between the two walls of the volume.

12. Method of assembly according to one of Claims 8 to 11, **characterised in that** the step of assembling and making integral the body formed by the cassette (1) and all the inner elements (3, 4) inside a vehicle door (5) consists, on the one hand, in making each element (3, 4) integral with the walls (52) of the door and, on the other hand, in making at least one mechanism of each element (4) integral with a mechanism of the cassette (1), when necessary.

13. Device for assembling at least one component **characterised in that** it comprises means (7, 8, 20, 21, 22) for removably linking the component(s) (3, 4) to a cassette (1) intended to be assembled inside an opening element of a vehicle, the means (7, 8, 20, 21, 22, 23) for removable linking being shaped in order to ensure locking in rotation and in translation, with respect to the cassette (1), of the component(s) (3, 4) to be assembled inside the opening element.

14. Assembling device according to Claim 13, **characterised in that** a removable linking means comprises a bar (20) having means (203, 204) allowing it to be locked, both to the cassette (1), and to one of the components (4), these locking means (203, 204) being unlockable once all components (4) are positioned in the door so as to release the well (54).

15. Assembling device according to Claim 13, **characterised in that** a retractable linking means comprises a tapped sleeve (7) ensuring, by means (14, 42) for making integral, the linkage between the cassette (1) and an inner component (4), the tapping of the sleeve (7) being intended to collaborate with a screw (531) for fixing one of the inner elements (4), the retraction of the sleeve (7) being produced by screwing in the fixing screw (531) when the inner element (4) is made integral with the door (5).

16. Assembling device according to one of Claims 13 to 15, **characterised in that** the inner door components (3, 4) comprise, on the one hand, the technical part of an outer opening control (4) intended to be made integral with the inner surface of the metal sheet forming the outer wall of the door, by the intermediary of an outer part (53) positioned on a cup packing of the outer surface of the metal sheet and fixing means ensuring mechanical linkage between the outer part and the technical part of the outer opening control (4), and/or, on the other hand, the locking mechanism (3) of the door.

17. Assembling device according to one of Claims 13 to 16, **characterised in that** it comprises an outer part constituted by a trim and a gripping member.

18. Device for assembling at least one inner element of a vehicle door according to Claim 10, **characterised in that** the outer wall (52) of the door comprises a recess or a cut-out for centring the outer part (53), the latter having centring wells (530) that penetrate inside pins of the outer opening control, the wells receiving a screw for linking the outer part (53) with the technical part of the outer opening control (4).
